# EUROPEAN PATENT SPECIFICATION

(11) **EP 1 277 928 B1**
(45) Date of publication and mention of the grant of the patent: **22.09.2004**
(21) Application number: 02015863.0
(22) Date of filing: 16.07.2002
(51) Int. Cl.: F01N 3/01, F01N 3/027, B01D 46/50, B01J 19/08, B03C 3/017, B03C 3/51, B01D 53/92

(54) **Exhaust gas purifying apparatus and method for an internal combustion engine**
Abgasreinigungsanlage und Verfahren für einen Verbrennungsmotor
Dispositif et procédé pour la purification de gaz d'échappement d'un moteur à combustion

(30) Priority: 19.07.2001 JP 2001219706
(43) Date of publication of application: 22.01.2003
(73) Proprietor: Kabushiki Kaisha Toyota Chuo Kenkyusho, Aichi-gun, Aichi-ken, 480-1192 (JP)
(72) Inventor: Ueda, Matsuei, Kabushiki K. Toyota Chuo Kenkyusho, Aichi-gun, Aichi-ken, 480-1192 (JP); Itoh, Yoshihiko, K. K. Toyota Chuo Kenkyusho, Aichi-gun, Aichi-ken, 480-1192 (JP); Shinjoh, Hirofumi, K. K. Toyota Chuo Kenkyusho, Aichi-gun, Aichi-ken, 480-1192 (JP); Yokota, Koji, Kabushiki K. Toyota Chuo Kenkyusho, Aichi-gun, Aichi-ken, 480-1192 (JP); Nakakita, Kiyomi, K. K. Toyota Chuo Kenkyusho, Aichi-gun, Aichi-ken, 480-1192 (JP); Kayama, Tomoyuki, K. K. Toyota Chuo Kenkyusho, Aichi-gun, Aichi-ken, 480-1192 (JP)
(74) Representative: Kramer - Barske - Schmidtchen

(56) References cited:
- EP-A- 0 299 197
- EP-A- 0 859 132
- EP-A- 0 976 915
- WO-A-01/04467
- WO-A-01/30485
- FR-A- 2 798 303
- US-A- 5 715 677
- US-B1- 6 237 326
- JELLES S J ET AL: "Molten salts as promissing catalysts for oxidation of diesel soot: importance of experimental conditions in testing procedures" APPLIED CATALYSIS B: ENVIRONMENTAL, AMSTERDAM, NL, vol. 21, 1999, pages 35-49, XP002196699
- PATENT ABSTRACTS OF JAPAN vol. 006, no. 061 (M-123), 20 April 1982 (1982-04-20) & JP 57 002413 A (MATSUSHITA ELECTRIC IND CO LTD), 7 January 1982 (1982-01-07)
- PATENT ABSTRACTS OF JAPAN vol. 006, no. 236 (M-173), 25 November 1982 (1982-11-25) & JP 57 135213 A (MATSUSHITA DENKI SANGYO KK), 20 August 1982 (1982-08-20)
- PATENT ABSTRACTS OF JAPAN vol. 018, no. 465 (M-1665), 30 August 1994 (1994-08-30) & JP 06 146852 A (SENICHI MASUDA), 27 May 1994 (1994-05-27)

## Description

The present invention relates to an exhaust gas purifying apparatus and a method which can efficiently purify particulate materials (hereinafter abbreviated to as "PM") and gaseous components in exhaust gas temperature regions. The PM and gaseous components are included in exhaust gases which are emitted from diesel engines, and so forth. The PM are mainly made from carbon. The gaseous components are HC, NOₓ, and the like.

In the exhaust gases emitted from diesel engines, the PM are included which comprise carbon, soluble organic fractions (hereinafter abbreviated to as "SOF"), polymer organic compounds, sulfuric acid mists, and so forth. In view of the air pollution and the adverse influence to human bodies, the movement toward the inhibition of the PM emission has become much more active. In order to inhibit the PM emission, there are the following two ways: a method of trapping the PM by filters; and a method of burning and removing the PM by using flow-through type catalysts. The engineering developments have been going on in which each of them is used independently or both of them are used combinedly.

As for the filter, a honeycomb-shaped heat-resistant substrate is used whose opposite-end openings are closed alternately in a checkered pattern. Moreover, the flow-through type catalysts are not made into a structure which filters out the PM. Specifically, they have communication openings whose average diameter is 0.05 mm, preferably 0.2 mm or more, being fully larger than the particle diameters of the PM. On their communication passages, a catalytic coating layer is formed which comprises alumina, and so forth, with a noble metal loaded. The flow-through type catalysts are formed as a variety of shapes, such as pellet shapes, foam shapes, honeycomb shapes, and the like.

In the method of trapping the PM by filters, it is necessary to carry out maintenance, such as shaking off the deposited PM by vibration, removing the deposited PM by carrying out a heat treatment at elevated temperatures, and so on. Accordingly, the filters are required to exhibit sufficient strength and heat resistance, but have not yet exhibited the characteristics satisfactorily at present. Moreover, in order to apply the method to automotive internal combustion engines, a problem arises in that a heating apparatus is required for the maintenance. Hence, Japanese Unexamined Patent Publication (KOKAI) No. 6-146,852 disclcses a method in which radicals are generated by electrically discharged plasma and the PM deposited on a filter are oxidized at a low temperature by the resulting radicals.

However, in the method in which the deposited PM are burned and removed by electrically discharged plasma, a large electric powder is required so that the energy efficiency is low. Moreover, in the method in which filters are used, it is desirable to use filters whose meshes are fine in order to enhance the PM trapping efficiency. However, if the meshes are fine, a major problem arises in that the pressure loss enlarges. In addition, even when the deposited PM are burned and removed, another problem arises as well in that the remaining ash causes clogging of the filters.

Hence, the method is considered promising in which the PM are oxidized and burned by using flow-through type catalysts. In order to oxidize and burn the PM, it is possible to think of using oxidizing catalysts in which a noble metal, such as Pt, etc., is loaded, for instance. In this case, however, the PM, which do not contact with the oxidizing catalysts, are emitted as they are. Moreover, even when the PM contact with the oxidizing catalysts, the contact occurs between the solid phases. Accordingly, there arises a problem in that the PM are not oxidized and burned so much because the PM contact with the catalytic components with a low probability. Consequently, the following catalysts are utilized as well: catalysts which oxidize NO in exhaust gases to NO₂ and utilize the high oxidizing activity of NO₂; or catalysts whose oxidizing activity is enhanced by utilizing an oxygen releasing member, and so on.

Moreover, Japanese Patent No. 3,056,626 discloses a method in which the PM are burned and removed by trapping the charged PM onto pellets, made from a ferroelectric substance, with an electrostatic force and by generating micro-plasma between the pellets. With such an arrangement, it is possible to enhance the trapping efficiency of the PM by using flow-through type catalyst, and it is possible to efficiently burn and remove the trapped PM.

While, the temperature of the exhaust gases emitted from diesel engines is usually less than 300 °C. Moreover, when starting diesel engines, the exhaust gas temperature is much lower. Accordingly, when the PM are oxidized and burned by noble metal catalysts, a problem arises in that the PM are emitted in a large amount in the low temperature region in which it is difficult to activate noble metals.

Moreover, in the method in which the PM are trapped with an electrostatic force and the trapped PM are burned and removed by an electric discharge, the electricity required to electrically discharge is so large that the energy efficiency is low. In addition, in the method in which the PM are trapped by utilizing an electrostatic force, the PM, which lose the charge by trapping, come to re-dissipate, and are emitted eventually without being oxidized and burned. Accordingly, there is inevitably a limit in terms of the reduction of the PM emission

WO 01/30485 describes a non-thermal plasma reactor, in which at least a component of an active material is selected or modified to provide the capability of absorbing or trapping a predetermined chemical species in the gas flow, thereby increasing the effective residence time of the species relative to the residence time of unabsorbed species in the gas flow.

US Patent No. 5,715,677 describes an apparatus and process for reducing NOₓ and particulates from diesel engines by absorbing NOₓ onto a solid absorbent bed that simultaneously acts as a physical trap for the particulate matter, and then regenerating the solid absorbent by pulsed plasma decomposition of absorbed NOₓ followed by air oxidation of the trapped particulate matter.

In Jelles, et al., "Molten salts as promising catalysts for oxidation of diesel soot: importance of experimental conditions in testing procedures," Applied Catalysis B: Environmental 21 (1999) 35-49, the catalytic activity for soot oxidation using three 'eutectic salt mixtures based on oxides or sulphates of molybedenum, vanadium and cesium was reported.

EP 0299197 A2 describes an electrostatic particulate filter having a collecting electrode for separating particles from a gas. A corona discharge is applied to oxidize combustible particles.

It is an object of the present invention to efficiently trap and oxidize particulate matter in exhaust gas from an internal combustion engine, which is achieved by the apparatus of claim 1 and the method of claim 16.

Further embodiments of the present invention are provided by sub-claims 2-15.

Thus, by the exhaust gas purifying apparatus and method according to the present invention, it is possible to trap the PM by using flow-through type catalysts, and it is possible to efficiently oxidize and burn the trapped PM from the low temperature region. Moreover, it is possible to inhibit electricity consumption from enlarging so that the present exhaust gas purifying apparatus can be boarded into exhaust systems of automobiles.

A more complete appreciation of the present invention and many of its advantages will be readily obtained as the same becomes better understood by reference to the following detailed description when considered in connection with the accompanying drawings and detailed specification, all of which forms a part of the disclosure:
Fig. 1 is a block diagram for illustrating an exhaust gas purifying apparatus of Example No. 1 according to the present invention;
Fig. 2 is a perspective view, partly broken away, for illustrating a PM trapping-and-burning device which was used in the exhaust gas purifying apparatus of Example No. 1 according to the present invention;
Fig. 3 is a flow chart for illustrating how the exhaust gas purifying apparatus of Example No. 1 according to the present invention was controlled;
Fig. 4 is an explanatory diagram for illustrating an advantage exhibited by the exhaust gas purifying apparatus of Example No. 1 according to the present invention;
Fig. 5 is an explanatory diagram for illustrating another advantage exhibited by the exhaust gas purifying apparatus of Example No. 1 according to the present invention;
Fig. 6 is a flow chart for illustrating how an exhaust gas purifying apparatus of Example No. 2 according to the present invention was controlled;
Fig. 7 is an explanatory diagram for illustrating the region, demarcated by the engine speed and load, where no PM generate;
Fig. 8 is a perspective view, partly broken away, for illustrating a PM trapping-and-burning device which was used in an exhaust gas purifying apparatus of Example No. 3 according to the present invention;
Fig. 9 is a flow chart for illustrating how the exhaust gas purifying apparatus of Example No. 3 according to the present invention was controlled;
Fig. 10 is an explanatory diagram for illustrating an advantage exhibited by the exhaust gas purifying apparatus of Example No. 3 according to the present invention;
Fig. 11 is a block diagram for illustrating an exhaust gas purifying apparatus of Example No. 4 according to the present invention;
Fig. 12 is a flow chart for illustrating how the exhaust gas purifying apparatus of Example No. 4 according to the present invention was controlled; and
Fig. 13 is an explanatory diagram for illustrating an advantage exhibited by the exhaust gas purifying apparatus of Example No. 4 according to the present invention.

### DETAINED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

An exhaust gas purifying apparatus according to the present invention comprises: a charger for charging PM; a trapper for trapping the charged PM by an electrostatic force, the trapper including a catalyst having an oxidative activity at least; and a discharger for oxidizing the PM trapped onto the trapper by an electric discharge. Therefore, the PM, contained in exhaust gases, are charged when they pass the charger, and are trapped onto the trapper by an electrostatic force. Then, since the PM, trapped onto the trapper, are oxidized and burned by the catalyst, included in the trapper, the PM are suppressed to deposit onto the trapper. Accordingly, the pressure loss is inhibited from enlarging.

However, when starting engines, and so forth, the temperature of the exhaust gases falls in the low temperature region, the catalyst is not heated to the activation temperature so that it is difficult to oxidize and burn the PM. Hence, in the present exhaust gas purifying apparatus, the discharger is actuated in such a case, and thereby the PM, trapped onto the trapper, are burned and removed by electrically discharged plasma. Moreover, even when the PM deposit onto the trapper to cover the catalyst to lower the activity, the deposited PM can be burned and removed by actuating the discharger. Consequently, it is possible to re-activate the catalyst.

Therefore, by the exhaust gas purifying apparatus according to the present invention, it is possible to stably burn and remove the PM from the low temperature region to high temperature regions by using the catalyst and the discharger independently or by using them simultaneously. As a result, it is possible to inhibit the pressure loss from enlarging.

As for the charger, it is possible to use means capable of charging the PM. It is possible to utilize means for applying a direct-current voltage of about a few kilovolts to the exhaust gases, means for applying an alternate-current pulsating voltage of 10 kilovolts or more to them, means for causing an electric discharge in them, means for irradiating them with high frequency or ion shower, means for discharging them by friction, and so forth. At the charger, since an energy is consumed which is sufficient to only charge the PM, no great electricity is consumed at all.

Moreover, the trapper is a position which adsorbs the charged PM by an electrostatic force. For example, it is possible to make a portion of the present exhaust gas purifying apparatus, which is grounded, into the trapper.

The shape of the trapper is not limited in particular. The trapper can be formed on the wall surface of the exhaust gas passage, or can be formed as plate shapes, tube shapes, pellet shapes, honeycomb shapes, mesh shapes, and the like. Moreover, it is possible to dispose the trapper independently of the charger on a downstream side with respect to the charger. Alternately, it is possible to constitute the trapper so as to be shared by the charger. For instance, when an electric discharge is generated by applying a direct current voltage between a pair of electrodes which exist in the exhaust gases, the PM are usually charged negatively, and adsorbed onto the positive side or grounded side electrode by an electrostatic force. Therefore, when the trapper is formed as the positive side or grounded side electrode, the PM are adsorbed continuously onto the trapper, and are thereby oxidized and burned by the catalyst in the trapper.

As for the catalyst included in the trapper and having an oxidizing activity at least, it is possible to use oxidizing catalysts, 3-way catalysts, NOₓ storage-and-reduction type catalysts, and so forth, in which a noble metal is loaded on a support. As for the support, it is possible to use at least one porous oxide selected from the group consisting of alumina, zirconia, titania, silica, or composite oxides of these, and the like. As for the noble metal, it is possible to use at least one member selected from the group consisting of Pt, Rh, Pd, Ir, and so on. Note that the NOₓ storage-and-reduction type catalysts refer to the oxidizing catalysts with an NOₓ storage member, such as alkali metals, alkaline-earth metals, rare-earth elements, etc., further loaded thereon. The loading amounts of the noble metals or the loading amounts of the NOₓ storage members can be equivalent to those of the conventional oxidizing catalysts, 3-way catalysts or NOₓ storage-and-reduction type catalysts.

As for the catalytic component included in the trapper and having an oxidizing activity at least, it can further desirably be at least one member selected from the group consisting of catalytic components having a function of releasing oxygen, catalysts having a function of generating NO₂, molten-salt type catalysts melting at a predetermined temperature or more and oxidizing and burning the trapped PM. Since the catalytic components or catalysts exhibit a remarkably high oxidizing activity, it is possible to more efficiently oxidize and burn the trapped PM.

The catalytic components having a function of releasing oxygen can be metallic oxides which are generally expressed by a chemical formula "MOₓ" in which the value "x" can readily vary depending on temperature and/or atmosphere. Note that oxygen, which generates in the exchange process between inner oxide and gaseous phase, exhibits a higher PM oxidizing power than that of gaseous-phase oxygen. Specifically, iron oxide, manganese oxide, and so forth, agree with the object of the present invention. However, ceria, ceria-zirconia composite oxides, and the like, are preferable options especially.

Moreover, as for the catalysts having a function of generating NO₂, it is possible to exemplify catalysts, and so on, in which at least one member selected from the group consisting of noble metals, such as Pt, Pd, Rh, Ir, etc., is loaded on a porous support composed of alumina, silica, or the like, for instance.

In order to include the catalytic components or catalysts in the trapper, a method is available in which a coating layer comprising a powdery catalyst on a surface of the trapper. Alternatively, it is possible to form the trapper itself of a porous oxide, and to load a noble metal on the surface to make a catalyst. Moreover, the content of the catalyst in the trapper is determined in accordance with the size of the trapper, the amount of the trapped PM, the activity of the catalyst, or the like. However, when the catalyst is formed as a coating layer on a surface of the trapper, it can preferably be formed in a thickness falling in a range of from 0.01 to 1 mm. When the thickness is thinner than the lower limit value, the size of the trapper is enlarged too much to be practical. When the thickness is thicker than the upper limit value, it is difficult to effectively utilize the inner catalytic component.

The catalyst can further desirably be a molten-salt type catalysts melting at a predetermined temperature or more and oxidizing and purifying the trapped PM. The predetermined temperature refers to a temperature or more of exhaust gases, emitted from internal combustion engines, and can desirably be lower. In particular, when the present invention is applied to diesel engines whose exhaust gas temperature is lower, the predetermined temperature can desirably be 300 °C or less. Further, when the molten-salt type catalyst makes the catalyst, since it melts and turns into a liquid state, it is possible to more securely trap the PM. Furthermore, the contacting area between the PM and the catalyst is so large that it is possible to efficiently oxidize and burn the PM. Moreover, since the PM, which have been trapped by the liquid molten-salt type catalyst, are inhibited from re-dissipating even when they lose the charge, it is possible to furthermore reduce the emission of the PM.

As for the molten-salt type catalysts, it is possible to use Cs₂MoO₄-V₂O₅, CsVO₃-MoO₃, Cs₂SO₄-V₂O₅, or Cs₂O·V₂O₅, K₂O·V₂O₅, and so forth. However, it is especially desirable to use molten-salt type catalysts which comprise a solid support and a catalytic component loaded on the solid support and being at least one member selected from the group consisting of silver nitrate, nitrates of alkali metals, nitrates of alkaline-earth metals and nitrates of rare-earth elements. Since the nitrate-based molten-salt type catalysts can melt in a much lower temperature region, it is possible to efficiently oxidize and burn the PM in the diesel exhaust gases whose temperature is low.

Moreover, in the nitrate-based molten-salt type catalysts, the catalytic component in which a molten salt is included is loaded on the solid support. Therefore, even when the molten salt is turned into the liquid phase, the molten salt is kept being adhered onto the solid support by the interaction between itself and the solid support. Accordingly, there arises no drawback in that the molten salt is flowed to the downstream side. Moreover, since the catalytic component is solid at ordinary temperature, it is possible to handle the catalyst with ease. In addition, it is possible to board the catalyst into exhaust passages in the same manner as the conventional 3-way catalysts, and the like.

Moreover, since the nitrates are used as the molten salt, even when decomposition occurs in the nitrates in a high temperature region, the nitrates are generated again by nitrogen oxides included in exhaust gases. Thus, since the catalytic components are regenerated, the nitrate-based molten-salt type catalysts are good in terms of the durability. Note that it is possible to utilize the phenomenon to purify NOₓ.

In addition, when molten salts, such as lithium nitrate, etc., which melt at an exceptionally low temperature, is used, the contactability is improved between the resulting catalyst and the PM in a low temperature region. Consequently, it is possible to oxidize and burn the PM in a wide temperature range from a low temperature region to a high temperature region.

As for the solid support used in the nitrate-based molten-salt type catalysts, it is possible to use alumina, zirconia, titania, silica, zeolite, and so on, which have been used in the conventional 3-way catalysts, and so forth. However, it is especially preferable to use basic supports, such as magnesia spinel, zirconia, oxides of alkali metals, oxides of alkaline-earth metals, oxides of rare-earth elements, and the like. The oxides of alkaline-earth metals can be magnesia, etc. The oxides of rare-earth elements can be lanthanum oxide, neodymium oxide, etc. By using the basic supports, the solid phase reactions are suppressed between the catalytic components and the supports. Accordingly, the resulting catalysts are improved in terms of the durability.

The catalytic component includes at least one member selected from the group consisting of silver nitrate, nitrates of alkali metals, nitrates of alkaline-earth metals and nitrates of rare-earth elements. As for the nitrates of alkali metals, it is possible to exemplify KNO₃, CsNO₃, NaNO₃, LiNO₃, etc. As for the nitrates of alkaline-earth metals, it is possible to exemplify Ba(NO₃)₂, Sr(NO₃)₂, Ca(NO₃)₂, Mg(NO₃)₂, etc. As for the nitrates of rare-earth elements, it is possible to exemplify Y₂(NO₃)₃, La₂(NO₃)₃, Nd₂(NO₃)₃, Pr₂(NO₃)₃, etc. One of the oxides can be used independently, or a plurality of them can be combined to make composite nitrates to load them on the solid support. By making composite nitrates, the melting point lowers in many cases.

As for the composite nitrate, the following are preferable options: AgNO₃-CsNO₃, CsNO₃-KNO₃, CsNO₃-NaNO₃, CsNO₃-LiNO₃, KNO₃-Mg(NO₃)₂, LiNO₃-NaNO₃, NaNO₃-Ca(NO₃)₂, NaNO₃-Mg(NO₃)₂, AgNO₃-KNO₃-NaNO₃, AgNO₃-NaNO₃-Ba(NO₃)₂, KNO₃-LiNO₃-NaNO₃, KNO₃-NaNO₃-Mg(NO₃)₂, KNO₃-Ba(NO₃)₂-Ca(NO₃)₂, KNO₃-Ba(NO₃)₂-Sr(NO₃)₂, KNO₃-Ca(NO₃)₂-Sr(NO₃)₂, LiNO₃-NaNO₃-Ca(NO₃)₂, NaNO₃-Ca(NO₃)₂-Mg(NO₃)₂, NaNO₃-Ca(NO₃)₂-Sr(NO₃)₂, KNO₃-NaNO₃-Ca(NO₃)₂-Mg(NO₃)₂, and so forth. When the composite nitrates are used, it is possible to make the melting point 200 °C or less.

The nitrates included in the catalytic components can desirably exhibit a low melting point and a high decomposition temperature. With such nitrates, it is possible to efficiently burn and remove the PM in a wide temperature range as well as in exhaust gases with a large space velocity. For example, among the aforementioned nitrates, the nitrates including the nitrates of alkali metals are more preferable options, and the nitrates including LiNO₃ are the most preferable options.

The loading amount of the nitrates can be 1% by weight or more. When the loading amount is less than 1% by weight, it is difficult to oxidize and burn the PM. The more the loading amount of the nitrates is the more it is likely that the oxidation-and-burning temperature of the PM lowers. However, when the nitrates are loaded in an amount of 120% by weight or more, they are insufficiently stabilized on the solid support so that there might arise a case where they are flowed to the downstream side to agglomerate. Hence, the loading amount can desirably be less than 120% by weight.

The catalytic components can desirably further include an oxidation promoting component. The oxidation promoting component promotes the oxidation and burning of the PM by oxidizing the SOF, or the like, in the PM. As for the oxidation promoting component, it is possible to use noble metals and a variety of oxides. The noble metal can be Pt, Pd, Rh, etc. The oxides can be CeO₂, ZrO₂, CeO₂-ZrO₂ solid solutions, BaO, CaO, V₂O₅, ZnO, WO₃, MoO₃, NiO, FeO, Fe₃O₄, Fe₂O₃, MnO₂, Cr₂O₃, CuO, CoO, Co₃O₄, etc. Among them, the oxidation promoting components can especially desirably include Pt. Pt effects not only the action of oxidizing the SOF but also the action of reducing the NOₓ in exhaust gases. Moreover, when Pt is loaded adjacent to the nitrates, since Pt re-generates the nitrates which have been decomposed at elevated temperatures, the resulting catalyst is improved in terms of the durability.

When the oxidation promoting component is the noble metals, the loading amount can preferably fall in a range of from 0.1 to 10% by weight. When the oxidation promoting component is the respective oxides, the loading amount can preferably fall in a range of from 1 to 50% by weight. When the loading amount is less than the lower limit values, the oxidation promoting component does not effect the advantage. When the loading amount is more than the upper limit values, not only the advantage saturates but also there might arise a case where the oxidation promoting component affects adversely.

When loading the nitrates on the solid support, an aqueous solution of the nitrates can be impregnated into the solid support, and the solid support can be dried. Moreover, when loading the oxidation promoting components on the solid support, they can be loaded on the solid support by using an aqueous solution of their metallic compounds, and the solid support can be calcined.

When including the molten-salt type catalyst in the trapper, the molten-salt type catalyst can preferably exist as close as possible to the superficial side of the trapper. It is especially preferably to form the molten-salt type catalyst on the surface of the trapper in a layered manner. For instance, a method is available in which a powder of the molten-salt type catalyst is made into a slurry together with a binder and a solvent, and the resulting slurry is coated on the surface of the trapper, and thereafter the trapper is heat-treated. If such is the case, it is desirable to use organic solvents into which the nitrates do not elute out. However, it is possible to use water, and so forth, into which the nitrates elute out, as well. Moreover, as for the binder, it is possible to use, aluminum nitrate, and the like.

The content of the molten-salt type catalyst in the trapper is determined in accordance with the size of the trapper, the amount of the trapped PM, the activity of the molten-salt type catalyst, or the like. However, when the molten-salt type catalyst is formed on the surface of the trapper in a layered manner, it is preferable to form the molten-salt type catalyst in a thickness falling in a range of from 0.01 to 1 mm. When the thickness is less than the lower limit value, the size of the trapper is too big to be practical. When the thickness is more than the upper limit value, it is difficult to effectively utilize the inner catalytic component.

By attaching the catalyst to the PM trapper, it is possible to carry out the purification of NOₓ as well, in which the PM make a reducing agent, simultaneously with the burning of the PM. Moreover, it is possible to carry out the purification of HC as well. In order to more powerfully purify NOₓ and HC, it is desirable to dispose another catalyst for purifying NOₓ and HC independently of the trapper.

The discharger is a part which burns and removes the PM trapped onto the trapper by an electric discharge energy, and is constituted so as to generate a plasma electric discharge by applying a high voltage of from 10 to 50 kV approximately. As for the high voltage source, it is possible to utilize direct-current voltages, alternate-current voltages, alternate-current pulsating voltages, or the like. For example, one or more pairs of electrode are formed in the trapper or adjacent to the trapper, and plasma is generated by electrically discharging between the electrodes. Thus, it is possible to burn and remove the trapped PM. The shape of the electrodes is not limited in particular. However, it is desirable to form the electrodes as needle shapes, edge shapes, and so forth, which are likely to cause an electric discharge.

It is possible to constitute the discharger so that it is shared by the charger. Namely, when trapping the PM, the PM can be charged by applying a relatively low voltage to the discharger/charger. When the PM are deposited onto the trapper to a certain extent, the PM can be burned by applying a high voltage to the discharger/charger to cause an electric discharge.

Note that large electricity is supplied when the discharger causes an electric discharge. Accordingly, in such a method that the discharger causes an electric discharge continuously, loads to automotive batteries are so large that it is not practical at all. Hence, it is desirable to control the actuation of the discharger.

When the temperature of the exhaust gases falls in a high temperature region, since the catalyst of the trapper is fully activated, it is possible to oxidize and burn the PM without actuating the discharger. Hence, it is preferred that the present exhaust gas purifying apparatus can further comprise a temperature sensor for detecting at least one of a temperature of the exhaust gases flowing into the trapper, and a temperature of the trapper, wherein the discharger is actuated when the temperature is less than a predetermined value. With such an arrangement, it is possible to actuate the discharger only in a low temperature region, in which it is difficult to activate the catalyst included in the trapper. Consequently, the present exhaust gas purifying apparatus is improved in terms of the energy efficiency.

Further, it is preferable to actuate the discharger only when the PM are deposited onto the trapper to a certain extent. If such is the case, it is preferred that the present exhaust gas purifying apparatus can further comprise a PM sensor for detecting a trapped amount of the PM trapped onto the trapper; wherein the discharger is actuated when the trapped amount is a predetermined value or more. The PM sensor can be based on such a method, and so on, that the trapped amount is found from the capacity difference between the electrode of the charger and the trapper.

Furthermore, in the present exhaust gas purifying apparatus, a content of the PM in the exhaust gases can preferably be estimated from operating states of the internal combustion engines; and at least one of the charger and the discharger can preferably be actuated when the content is a predetermined value or more. With such an arrangement, when the PM are little present in the exhaust gases in ordinary driving, and so forth, it is possible to avoid actuating the charger or the discharger. Accordingly, it is possible to avoid energy loss. On the other hand, only when the PM content is large in the exhaust gases in accelerating, and the like, the discharger is actuated to assist burning the PM. Consequently, it is possible to effectively inhibit the emission of the PM. Thus, it is possible to inhibit unnecessary electricity consumption, and thereby the present exhaust gas purifying apparatus is improved in terms of the energy efficiency.

Moreover, it is preferred that the present exhaust gas purifying apparatus with the above-described additional features can further comprise a second catalyst disposed on at least one of an upstream side and a downstream side with respect to the trapper and including at least one member selected from the group consisting of oxidizing catalysts, 3-way catalysts, NOₓ reducing catalysts and NOₓ storage-and-reduction type catalysts. For example, when one of the second catalysts is disposed on the upstream side with respect to the trapper, the second catalyst effects oxidation reactions to increase the temperature of the exhaust gases. Accordingly, it is possible to promote oxidizing and burning the PM at the trapper. When the 3-way catalysts are disposed on an upstream side or a downstream side with respect to the trapper, it is possible to suppress the emission of HC and CO. When the NOₓ reducing catalysts are disposed on an upstream side or a downstream side with respect to the trapper, it is possible to suppress the emission of NOₓ. Therefore, it is possible to purify not only the PM, which are emitted from diesel engines, but also the gaseous harmful components. Consequently, it is possible to furthermore inhibit the environmental pollution.

In addition, it is desired that the present exhaust gas purifying apparatus with the above-described additional features can further comprise a second discharger disposed on a downstream side with respect to the trapper, the second discharger purifying harmful components contained in outlet gases from the trapper by an electric discharge. With such an arrangement, even when the temperature of the exhaust gases falls in a low temperature region where it is difficult to activate the catalyst, it is possible to purify HC, CO and NOₓ by an electric discharge. However, note that, when the temperature of the exhaust gases falls in a high temperature region where the catalyst is activated, and when HC, CO and NOₓ are likewise purified by an electric discharge, electricity is consumed in such a large quantity that the energy efficiency is poor.

Hence, it is preferred that the present exhaust gas purifying apparatus with the above-described additional features can further comprise a second catalyst disposed on at least one of an upstream side and a downstream side with respect to the second discharger, the second discharger including at least one member selected from the group consisting of oxidizing catalysts, 3-way catalysts, NOₓ reducing catalysts and NOₓ storage-and-reduction type catalysts. with such an arrangement, it is possible to purify the exhaust gases by an electric discharge in a low temperature region, and it is possible to purify the exhaust gases by the second catalyst in a high temperature region while turning off the electric discharge. Thus, the present exhaust gas purifying apparatus is improved in terms of the energy efficiency, and thereby makes a remarkably practical exhaust gas purifying apparatus.

### Examples

The present invention will be hereinafter described in detail with reference to examples and comparative examples.

### (Example No. 1)

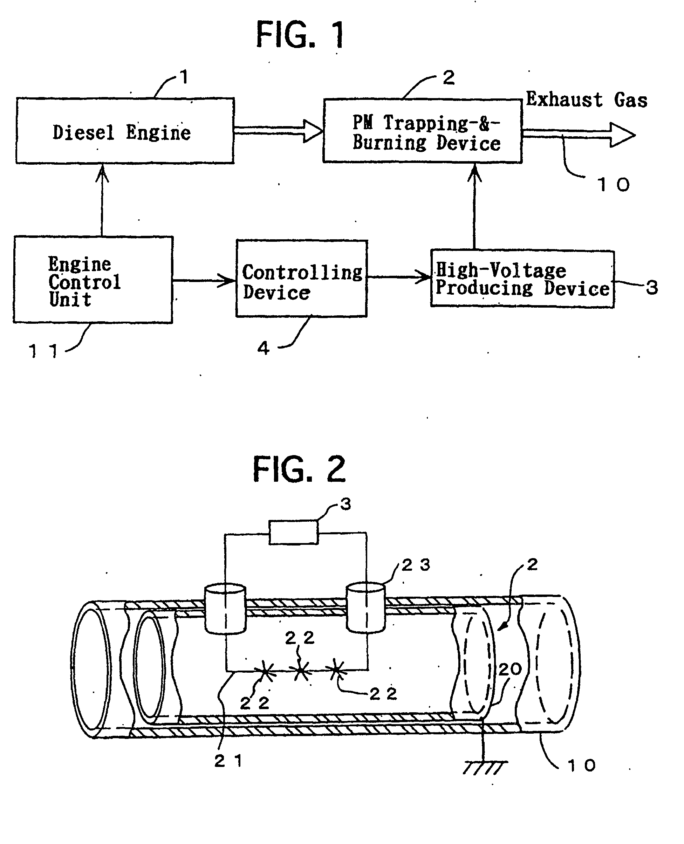

Fig. 1 illustrates an exhaust gas purifying apparatus of Example No. 1 according to the present invention. The exhaust gas purifying apparatus comprises a PM trapping-and-burning device 2, a high-voltage producing device 3 and a controlling device 4. The PM trapping-and-burning device 2 is disposed in an exhaust gas passage 10 of a diesel engine 1. The high-voltage producing device 3 applies a direct-current or alternate-current voltage to the PM trapping-and-burning device 2. The controlling device 4 receives signals from an engine control unit 11, which controls the operating states of the diesel engine 1, to control the high-voltage producing device 3.

As illustrated in Fig. 2 in detail, the PM trapping-and-burning device 2 comprises a cylindrical trapping portion 20 and an electric discharge electrode 21 which is disposed in the trapping portion 20. The trapping portion 20 comprises a substrate and an oxidizing catalyst powder which is coated on the substrate. The substrate is disposed inside a metallic cylinder, and is formed of a heat-resistant ceramics, such as cordierite, etc., in a net shape as well as a cylindrical shape. The oxidizing catalyst powder is made by loading Pt on an alumina powder in an amount of 2% by weight. Note that the trapping portion 20 is made so that the exhaust gases can flow through the cylindrical wall as well.

The coating layer comprising the oxidizing catalyst powder is formed by the wet coating method in the same manner as the generally used catalysts for purifying exhaust gases. The thickness of the coating layer is from 10 to 1,000 µm. Pt is loaded in an amount of 4 g with respect to the entire trapping portion 20.

The electric discharge electrode 21 comprises a plurality of needle-shaped electrodes 22 which are disposed on the central axis of the exhaust gas passage 10 radially. The electric discharge electrode 21 is connected with the high-voltage producing device 3 by way of insulators 23 which penetrate through the exhaust gas passage 10 and the trapping portion 20. Moreover, the exhaust gas passage 10 and the trapping portion 20 are grounded. Therefore, when the high-voltage producing device 3 applies a direct-current voltage to the electric discharge electrode 21, the PM in the exhaust gases are charged negatively, and are attracted toward the trapping portion 20 by an electrostatic force. When the high-voltage producing apparatus device 3 applies an alternate-current high voltage to the electric discharge electrode 21, electrically discharged plasma is generated between the inner wall of the exhaust gas passage 10 and the needle-shaped electrodes 22.

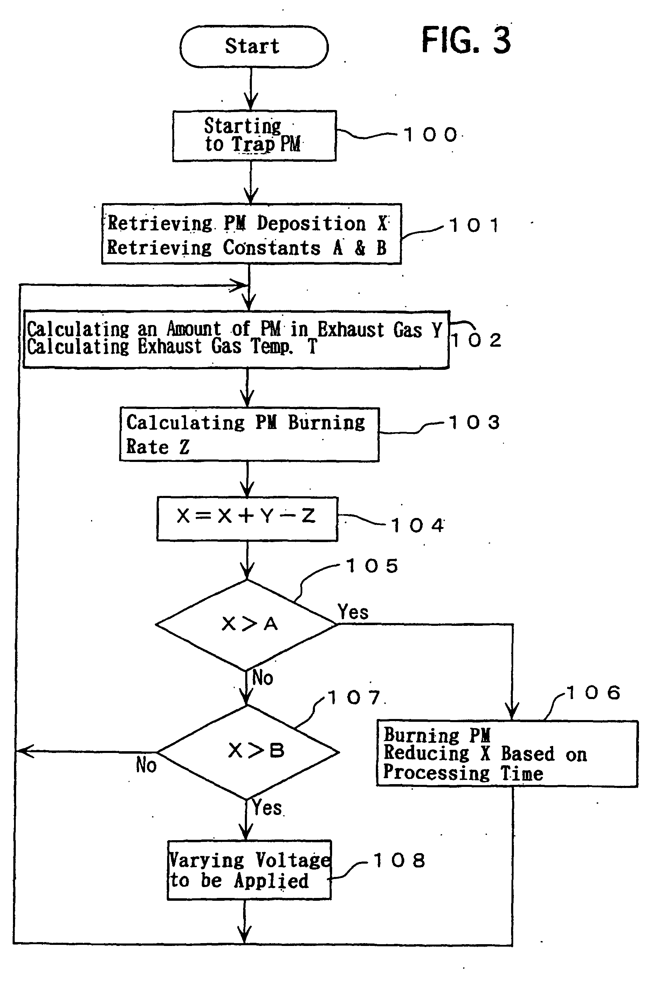

Hereinafter, while describing how the controlling device 4 controls the exhaust gas purifying apparatus of Example No. 1 with reference to the flow chart shown in Fig. 3, the operations of the exhaust gas purifying apparatus of Example No. 1 will be described in detail.

When the diesel engine 1 is started, the high-voltage producing device 3 is first actuated at step 100. Accordingly, a direct-current of -10 kV is applied between the inner wall of the exhaust gas passage 10 and the needle-shaped electrodes 22. Thus, the PM in the exhaust gas are charged negatively. The charged PM move toward the inner wall of the exhaust gas passage 10, and are trapped by the trapping portion 20 to deposit thereon.

Subsequently, at step 101, a current PM deposition X, a constant A and a constant B, which are recorded in the memory of the controlling device 4, are retrieved. The constant A is the upper limit value (or critical deposition) specifying the amount of the PM depositable onto the trapping portion 20. The constant B is the limit value specifying the amount of the PM below which the PM do not re-dissipate.

Then, at step 102, a current PM generation Y and an exhaust gas temperature T are calculated from the revolution numbers of the diesel engine 1 and the load circumstances thereof. These values are retrieved from data which have been recorded in advance as a map depicting the relationships among the engine speed of the diesel engine 1, the load thereto, the PM generation and the exhaust gas temperature. Of course, it is possible to calculate them by using relational equations, or to measure the exhaust gas temperature with a temperature sensor.

At step 103, a current burning rate Z of the oxidizing catalyst in the coating layer of the trapping portion 20 is calculated from the exhaust gas temperature T. This value is also calculated from data which have been recorded in advance in the memory of the controlling device 4 as a map depicting the relationship between the exhaust gas temperature and the burning rate. Then, at step 104, a calculation, X = X + Y - Z, is carried out, and thereby the current PM deposition X is updated.

Subsequently, at step 105, the PM deposition X is compared with the constant A. When the PM deposition X exceeds the critical deposition A, at step 106, an alternate-current high voltage of 12.5 kV is applied between the inner wall of the exhaust gas passage 10 and the needle-shaped electrodes 22. Thus, plasma is generated between the inner wall of the exhaust gas passage 10 and the needle-shaped electrodes 22. As a result, the deposited PM are burned and removed. In this instance, the PM deposition X is updated by reducing it in accordance with the time required for the electric discharge. Thereafter, the processing returns to step 102.

On the other hand, when the PM deposition X is the critical deposition A or less, at step 107, the PM deposition X is compared with the constant B. When the PM deposition X exceeds the predetermined value B, since the PM are very likely to re-dissipate, at step 108, the direct-current voltage, which is applied between the inner wall of the exhaust gas passage 10 and the needle-shaped electrodes 22, is raised by 1 kV approximately. Thus, the voltage of the charged PM is enlarged in order to inhibit the PM from re-dissipating. When the PM deposition X is the predetermined value B or less, no action is taken, and the processing returns to step 102.

Therefore, by the exhaust gas purifying apparatus of Example No. 1, when the PM deposition X is the predetermined value B or less, the PM in the exhaust gas are trapped onto the trapping portion 20 successively by charging, and are oxidized and burned by the oxidizing catalyst which exists in the trapping portion 20. Thus, the PM are removed. On the other hand, when the PM deposition X exceeds the predetermined value B, the voltage of the charged PM is enlarged. Accordingly, it is possible to maintain the state in which the PM are trapped onto the trapping portion 20. Thus, the PM are inhibited from re-dissipating which is caused by the disappearing charge from the PM.

Then, when the PM deposition X exceeds the critical deposition A, the deposited PM are burned and removed by the electrically discharged plasma. Consequently, the PM deposition X lowers sharply. As a result, the trapping portion 20 recovers the PM trapping ability again.

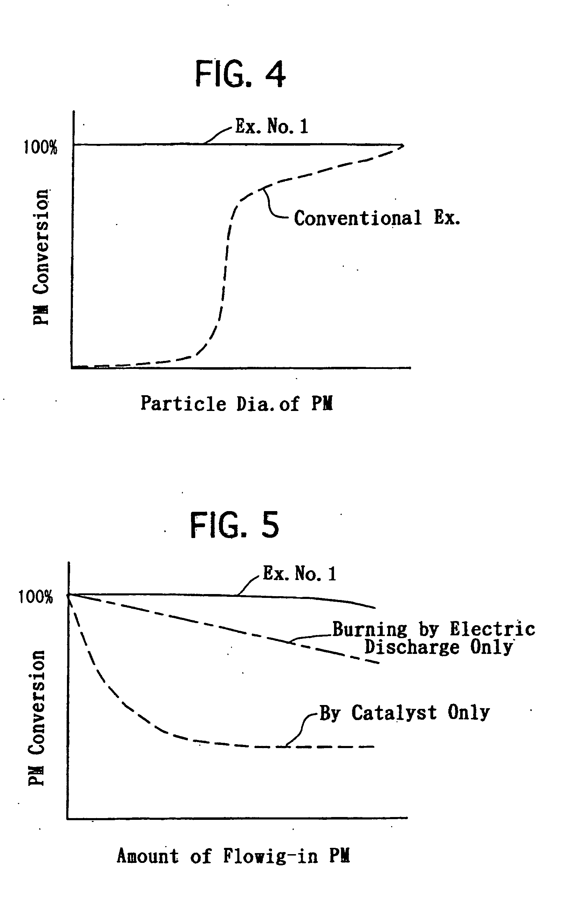

Fig. 4 and Fig. 5 illustrate the advantage effected by the exhaust gas purifying apparatus of Example No. 1. In Fig. 4, the PM conversion is plotted with respect to the vertical axis, and the particle diameter of the PM is plotted with respect to the horizontal axis. In a conventional diesel particulate filter, the PM having small particle diameters passed through the filter as shown by the dotted line of the drawing. Thus, no trapping function was revealed unless the PM had a certain particle diameter or more. On the contrary, by the exhaust gas purifying apparatus according to the present invention, regardless of the particle diameters of the PM, it was possible to secure the PM conversion of virtually 100%.

Moreover, in Fig. 5, the PM conversion is plotted with respect to the vertical axis, and the amount of the PM flowing in the apparatuses is plotted with respect to the horizontal axis. For instance, when the deposited PM were purified by the oxidizing catalyst only or by the electrically discharged plasma only, the PM conversion lowered as the amount of the flowing-in PM enlarged. On the contrary, by the exhaust gas purifying apparatus of Example No. 1, since it was possible to remove the PM by both of the oxidizing catalyst and the electrically discharged plasma, it was possible to secure the high PM conversion even when the amount of the flowing-in PM enlarged.

In addition, in order to burn the deposited PM by the electric discharge, the high-voltage producing device 3 could be actuated to produce a high voltage for such a short period of time only when the PM deposition X exceeded the critical deposition A. Therefore, the exhaust gas purifying apparatus of Example No. 1 consumed electricity less, and was good in terms of the energy efficiency.

### (Example No. 2)

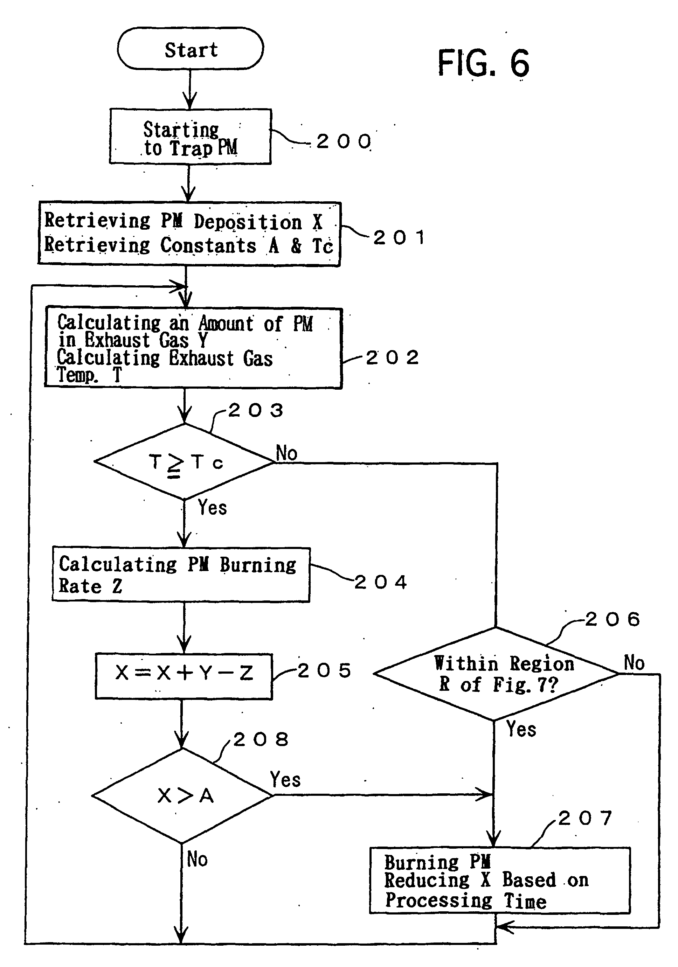

In Example No. 2, the exhaust gas purifying apparatus of Example No. 1 is used. Except that the control operations differ from those of Example No. 1, Example No. 2 is arranged in the same manner as Example No. 1. Hereinafter, how the controlling device 4 controls the exhaust gas purifying apparatus will be described in detail with reference to the flow chart shown in Fig. 6.

When the diesel engine 1 is started, the high-voltage producing device 3 is actuated first at step 200. Accordingly, a direct-current voltage of -10 kV is applied between the inner wall of the exhaust gas passage 10 and the needle-shaped electrodes 22. Thus, the PM in the exhaust gas are charged negatively. The charged PM move toward the inner wall of the exhaust gas passage 10, and are trapped by the trapping portion 20 to deposit thereon.

Subsequently, at step 201, a current PM deposition X, a constant A and a constant Tc, which are recorded in the memory of the controlling device 4, are retrieved. The constant A is the critical deposition specifying the amount of the PM depositable onto the trapping portion 20. The constant Tc is the minimum temperature (or activation temperature) at which the oxidizing catalyst is activated. Then, at step 202, a current PM generation Y and a current exhaust gas temperature T are calculated from the engine speed of the diesel engine 1 and the load circumstances thereof. These values are retrieved from data which have been recorded in advance as a map depicting the relationships among the revolution number of the diesel engine 1, the load thereto, the PM generation and the exhaust gas temperature. Of course, it is possible to calculate them by using relational equations, or to measure the exhaust gas temperature with a temperature sensor.

At step 203, the exhaust gas temperature T is compared with the activation temperature Tc. When the exhaust gas temperature T is the activation temperature Tc or more, the deposited PM are burned and oxidized at the trapping portion 20. Hence, at step 204, a current burning rate Z of the oxidizing catalyst in the coating layer of the trapping portion 20 is calculated from the exhaust gas temperature T. This value is also calculated from data which have been recorded in advance in the memory of the controlling device 4 as a map depicting the relationship between the exhaust gas temperature and the burning rate. Then, at step 205, a calculation, X = X + Y - Z, is carried out, and thereby the current PM deposition X is updated.

On the other hand, when the exhaust gas temperature T is lower than the activation temperature Tc, the oxidizing catalyst does not reveal the activity. Accordingly, since it is difficult to oxidize and burn the deposited PM, the PM kept depositing onto the trapping portion 20. Therefore, if such is the case, it is desirable to burn the deposited PM by electrically discharged plasma. However, note that, in the exhaust gas purifying apparatus, the charger is shared by the discharger. Consequently, it is difficult to charge the PM during the electric discharge. Thus, there might arise a fear in that the PM are not trapped onto the trapping portion 20 so that the PM emission enlarges eventually.

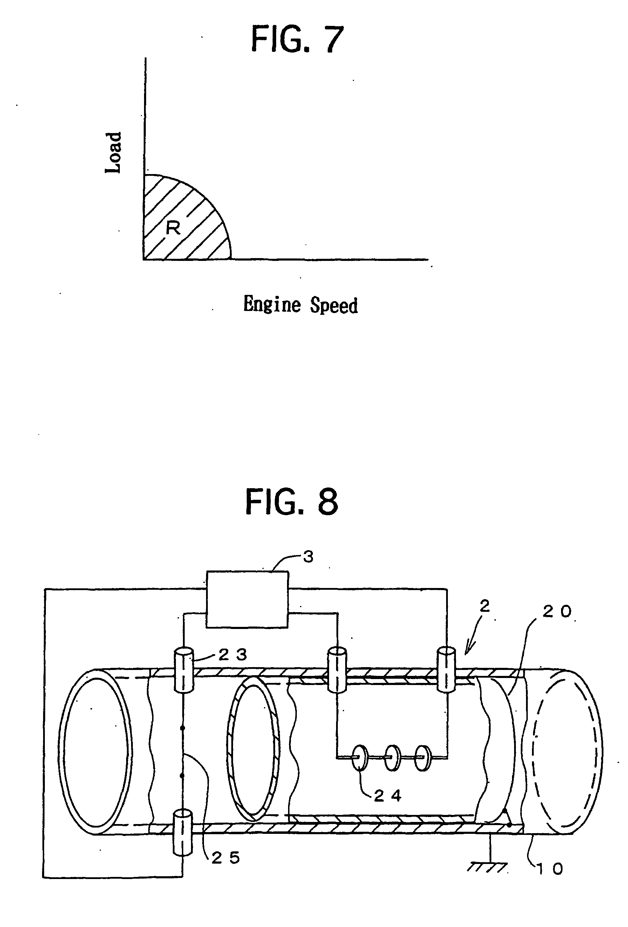

Hence, at step 206, the controlling device 4 refers to a map shown in Fig. 7. Under the operating conditions within the region R shown in Fig. 7, the harmful components involving the PM are generated less. Under the operating conditions outside the region R, it is necessary to trap the PM. Therefore, when the engine speed of the diesel engine 1 and the load thereto, which are found at step 202, fall within the region R, it is not necessary to trap the PM. Accordingly, at step 207, an alternate-current high voltage of 12.5 kV is applied between the inner wall of the exhaust gas passage 10 and the needle-shaped electrodes 22. Thus, electrically discharged plasma is generated between the inner wall of the exhaust gas passage 10 and the needle-shaped electrodes 22. As a result, the deposited PM are burned and removed. Then, at step 207, the PM deposition X is updated by reducing it in accordance with the time required for the electric discharge. Thereafter, the processing returns to step 202 to further continue trapping the PM. On the other hand, when the engine speed of the diesel engine 1 and the load thereto fall outside the region R, it is necessary to trap the PM. Consequently, no action is taken, and the processing returns to step 202.

Moreover, at step 203, when the exhaust gas temperature T is higher than the activation temperature Tc, the current PM deposition X is updated at step 205. Then, at step 208, the PM deposition X is compared with the critical deposition A. When the PM deposition X exceeds the critical deposition A, at step 207, an alternate-current high voltage of 12.5 kV is applied between the inner wall of the exhaust gas passage 10 and the needle-shaped electrodes 22. Thus, electrically discharged plasma is generated between the inner wall of the exhaust gas passage 10 and the needle-shaped electrodes 22. As a result, the deposited PM are burned and removed. In this instance, the PM deposition X is updated by reducing it in accordance with the time required for the electric discharge. Thereafter, the processing returns to step 202.

On the other hand, when the PM deposition X is the critical deposition A or less, it is still possible to trap the PM. Accordingly, no action is taken, and the processing returns to step 202.

Therefore, by the exhaust gas purifying apparatus of Example No. 2, even in a low temperature region where the oxidizing catalyst has not been activated yet, it is possible to burn and remove the PM by electrically discharged plasma. Thus, it is possible to suppress the PM emission in the low temperature region. Moreover, only in a case of the low temperature region where it is unnecessary to trap the PM, to put it differently, or a case where the PM deposition X exceeds the critical deposition A, electrically discharged plasma is generated. Consequently, the exhaust gas purifying apparatus consumes electricity less, and exhibits a good energy efficiency.

### (Example No. 3)

Fig. 8 illustrates an exhaust gas purifying apparatus of Example No. 3. The exhaust gas purifying apparatus differs from that of Example No. 1 regarding the following arrangements. On the coating layer of the trapping portion 20, a molten-salt type catalyst is loaded instead of the oxidizing catalyst. A plurality of disk-shaped fins 24 are disposed instead of the needle-shaped electrodes 22. Then, a fine copper wire 25 is disposed on an upstream side with respect to the trapping portion 20, and extends in the diametric direction of the exhaust gas passage 10 so that it spans between the insulators 23. The high-voltage producing device 3 applies a direct-current voltage to the copper wire 25. Except the above-described arrangements, the exhaust gas purifying apparatus is the same as that of Example No. 1. Note that not only the high-voltage producing apparatus 3 can apply a direct-current high voltage to the copper wire 25 but also it can apply an alternate-current high voltage to the disk-shaped fins 24.

A coating layer is coated on the trapping portion 20 in the following manner. A catalyst powder is prepared by loading 4 g of KNO₃ and 2 g of Pt with respect to 100 g of a magnesia spinel support. 100 g of the catalyst powder is mixed with 300 g of water to make a slurry. The slurry is impregnated into the trapping portion 20, and is thereafter dried at 250 °C. The thickness of the coating layer is 0.1 mm.

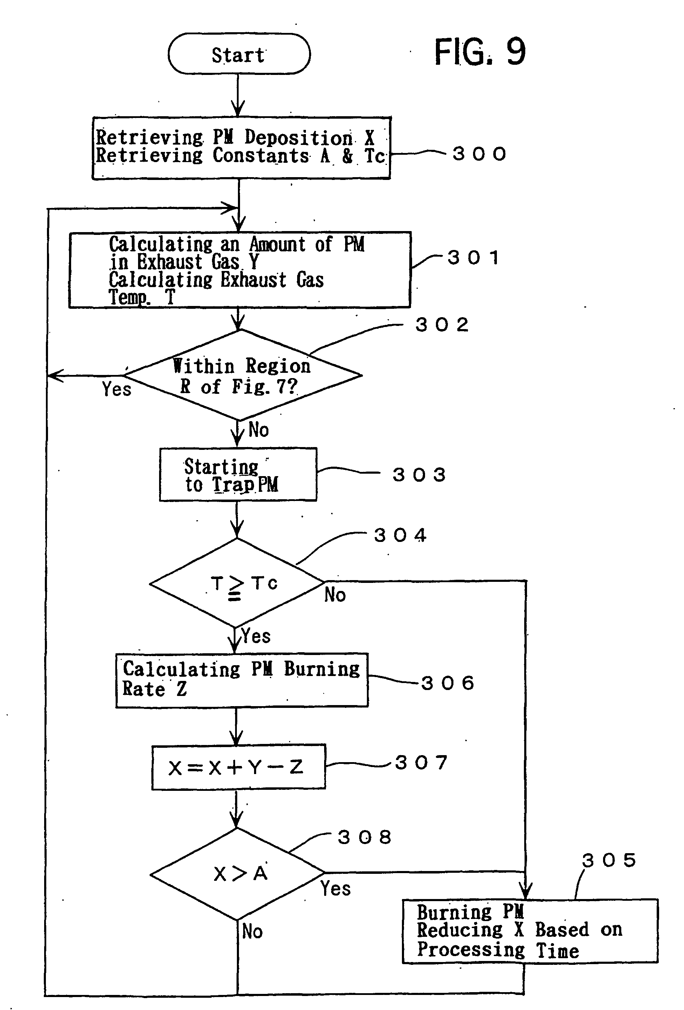

Hereinafter, while describing how the controlling device 4 controls the exhaust gas purifying apparatus of Example No. 3 with reference to the flow chart shown in Fig. 9, the operations of the exhaust gas purifying apparatus of Example No. 3 will be described in detail.

When the diesel engine 1 is started, at step 300, a current PM deposition X, a critical deposition A and an activation temperature Tc, which are recorded in the memory of the controlling device 4, are retrieved first. Moreover, at step 301, a current PM generation Y and a current exhaust gas temperature T are calculated from the engine speed of the diesel engine 1 and the load circumstances thereof. These values are retrieved from data which have been recorded in advance as a map depicting the relationships among the engine speed of the diesel engine 1, the load thereto, the PM generation and the exhaust gas temperature. Of course, it is possible to calculate them by using relational equations, or to measure the exhaust gas temperature with a temperature sensor.

Subsequently, at step 302, the controlling device 4 refers to the map shown in Fig. 7. Under the operating conditions within the region R shown in Fig. 7, the harmful components involving the PM are generated less. Under the operating conditions outside the region R, it is necessary to trap the PM. Therefore, when the engine speed of the diesel engine 1 and the load thereto, which are found at step 301, fall within the region R of the map, it is not necessary to trap the PM. Accordingly, no action is taken, and the processing returns to step 301.

On the other hand, when the engine speed of the diesel engine 1 and the load thereto fall outside the region R, at step 303, the high voltage producing device 3 is actuated to apply a direct-current voltage of -10 kV to the copper wire 3. Thus, the PM in the exhaust gas are charged negatively, and the charged PM are trapped by the downstream side trapping portion 20 to deposit thereon. Then, at step 304, the exhaust gas temperature T is compared with the activation temperature Tc. The activation temperature Tc is the minimum temperature at which the molten-salt type catalyst is activated. When the exhaust gas temperature T is lower than the activation temperature Tc, it is difficult to oxidize and burn the deposited PM. Hence, at step 305, an alternate-current high voltage of 12.5 kV is applied between the inner wall of the exhaust gas passage 10 and the disk-shaped fins 24. Thus, electrically discharged plasma is generated between the inner wall of the exhaust gas passage 10 and the disk-shaped fins 24, and thereby the deposited PM are burned and removed. In this instance, the PM deposition X is updated by reducing it in accordance with the time required for the electric discharge. Thereafter, the processing returns to step 301.

Moreover, at step 304, when the exhaust gas temperature T is higher than the constant Tc, the molten-salt type catalyst, which is loaded on the trapping portion 20, is fully activated. Accordingly, at step 306, a current burning rate Z of the molten-salt type catalyst in the coating layer of the trapping portion 20 is calculated from the exhaust gas temperature T. This value is also calculated from data which have been recorded in advance in the memory of the controlling device 4 as a map depicting the relationship between the exhaust gas temperature and the burning rate. Then, at step 307, a calculation, X = X + Y - Z, is carried out, and thereby the current PM deposition X is updated.

Here, note that the KNO₃ is melted to be liquid. Accordingly, the trapped PM are captured by the liquid phase, and are simultaneously oxidized so that they are burned and removed. Moreover, since the PM are captured by the liquid phase, even if they lose the charge, they are inhibited from re-dissipating. Therefore, the emission of the PM, which results from re-dissipating, is inhibited as well.

However, even if the molten-salt type catalyst is turned into the liquid phase, when the deposition of the trapped PM exceeds a certain degree, there arises a phenomenon that the PM lose the charge to re-dissipate. Hence, when the current PM deposition X is updated at step 307, at step 308, the PM deposition X is compared with the critical deposition A. When the current PM deposition X is the critical deposition A or less, it is still possible to trap the PM. Accordingly, no action is taken, and the processing returns to step 301.

On the other hand, when the current PM deposition X is larger than the critical deposition A, there is a fear of re-dissipating the PM. Consequently, it is necessary to burn the PM. Hence, at step 305, an alternate-current high voltage of 12.5 kV is applied between the inner wall of the exhaust gas passage 10 and the disk-shaped fins 24. Thus, electrically discharged plasma is generated between the inner wall of the exhaust gas passage 10 and the disk-shaped fins 24, and thereby the deposited PM are burned and removed. In this instance, the PM deposition X is updated by reducing it in accordance with the time required for the electric discharge. Thereafter, the processing returns to step 301.

Namely, by the exhaust gas purifying apparatus of Example No. 3, the molten-salt type catalyst, which melts to turn into liquid, is loaded on the trapping portion 20. Therefore, it is possible to furthermore inhibit the trapped PM from re-dissipating. Moreover, in the low temperature region where the molten-salt type catalyst is not activated, it is possible to burn and remove the deposited PM by electrically discharged plasma. As a result, it is possible to remove the PM with a high conversion from a low temperature region to a high temperature region.

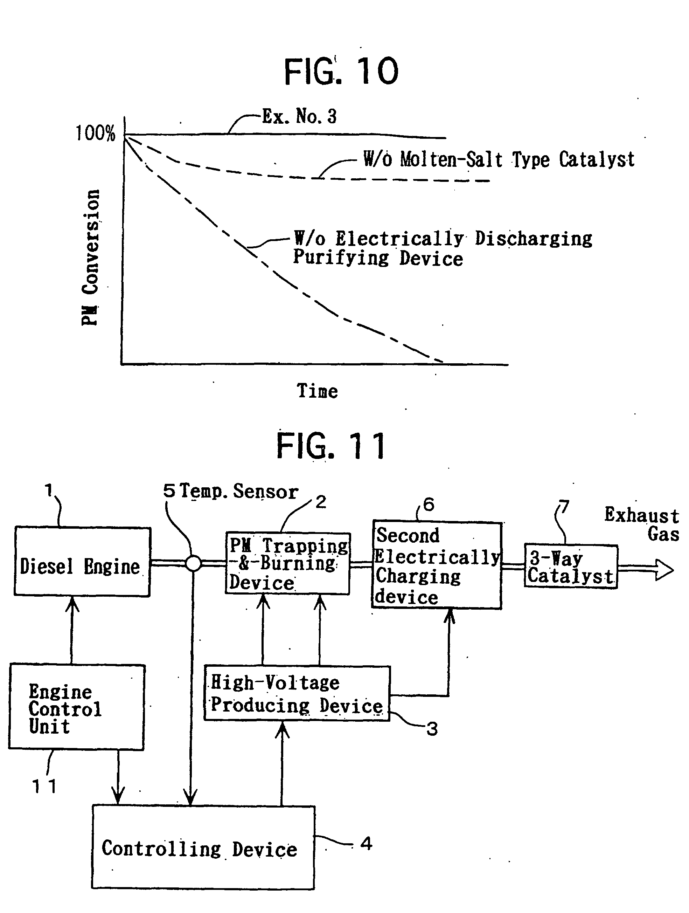

Fig. 10 illustrates the advantage effected by the exhaust gas purifying apparatus of Example No. 3. In Fig. 10, the PM conversion is plotted with respect to the vertical axis, and the time is plotted with respect to the horizontal axis. In a case where the PM were oxidized and burned only by the molten-salt type catalyst without burning the PM by electrically discharged plasma, the PM deposition enlarged as the time elapsed. Since the re-dissipating of the PM occurred, the PM conversion lowered, and eventually the PM are not oxidized at all so that they were emitted as they were. Moreover, in a case where the molten-salt type catalyst is not loaded and only the electric discharging was carried out, since the electrically discharged plasma was generated at the time when the PM deposition X coincided with the critical deposition A, the PM conversion reached a certain value to saturate. On the contrary, by the exhaust gas purifying catalyst of Example No. 3, since it was possible to remove the PM by both of the molten-salt type catalyst and the electrically discharged plasma, it was possible to secure a high PM conversion regardless of the elapsed time.

In addition, the high-voltage producing device 3 could be actuated with the high voltage in order to generate the electrically discharged plasma, which burned the deposited PM, for such a short period time that during the time only when the exhaust gas temperature fell in the low temperature region, or when the PM deposition X exceeded the critical deposition A. Therefore, the exhaust gas purifying apparatus of Example No. 3 consumed electricity less, and was good in terms of the energy efficiency.

### (Example No. 4)

Fig. 11 illustrates an exhaust gas purifying apparatus of Example No. 4. In the exhaust gas purifying apparatus, there is disposed a temperature sensor 5, which detects the exhaust gas temperatures, between the diesel engine 1 and the PM trapping-and-burning device 2 which is the same as that of Example No. 3. Moreover, on a downstream side with respect to the PM trapping-and-burning device 2, a second discharging device 6, which generates plasma in the exhaust gases. In addition, on a downstream side with respect to the second discharging device 6, there is disposed a 3-way catalyst 7. To the second discharging device 6, the high-voltage producing device 3 applies an alternate-current high voltage. The other arrangements are the same as those of Example No. 3.

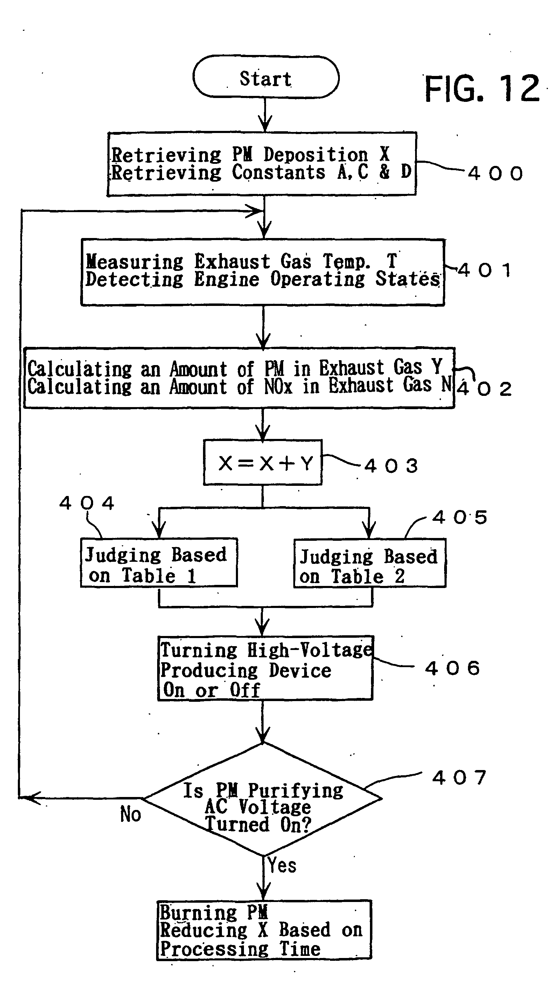

Hereinafter, while describing how the controlling device 4 controls the exhaust gas purifying apparatus of Example No. 4 with reference to the flow chart shown in Fig. 12, the operations of the exhaust gas purifying apparatus will be described in detail. Note that, in the following description, the voltage which the high-voltage producing device 3 applies to the copper wire 25 is referred to as a "charging DC voltage," the voltage which the high-voltage producing device 3 applies to the disk-shaped fins 24 is referred to as a "PM purifying AC voltage," and the voltage which the high-voltage producing device 3 applies to the second discharging device 6 is referred to as a "second discharging AC voltage."

When the diesel engine 1 is started, at step 400, the following are retrieved first: a current PM deposition X; a critical deposition A; a predetermined value C on the PM generation; and a predetermined value D on the NOₓ content, which are recorded in the memory of the controlling device 4.

Subsequently, at step 401, the temperature sensor 5 inputs an exhaust gas temperature T. Simultaneously, the operating states of the diesel engine 1 are detected. The operating states are detected at four stages, i.e., at the acceleration, at the deceleration, at the ordinary driving and at the idling.

Then, at step 402, an amount of PM Y and an amount of NOₓ N in the current exhaust gas are calculated from the engine speed of the diesel engine 1 and the load circumstance thereof. At step 403, the PM deposition X is updated. Thereafter, step 404 and step 405 are processed parallelly.

At step 404, based on a map (See Table 1 below.) which is recorded in the memory of the controlling device 4, the controlling device 4 controls to turn on or off the charging DC voltage, the PM purifying AC voltage and the second discharging AC voltage at the current exhaust gas temperature T. Here, the charging DC voltage is always turned on, and thereby the PM in the exhaust gas are trapped onto the trapping portion 20 by an electrostatic force. When the exhaust gas temperature T is less than 250 °C, since the temperature of the molten-salt type catalyst, which is loaded on the trapping portion 20, is less than the activation temperature Tc, the PM purifying AC voltage is turned on, thereby burning and removing the PM which are trapped by electrically discharged plasma. Moreover, since the 3-way catalyst 7 is not activated, either, the second discharging AC voltage is also turned on, thereby purifying the HC and NOₓ in the exhaust gas by secondarily electrically discharged plasma.

In addition, when the exhaust gas temperature T is from 250 to 300 °C, since the 3-way catalyst 7 is activated, the second discharging AC voltage is turned off to save electricity. However, in the temperature region, the molten-salt type catalyst is not fully activated in the trapping portion 20, the PM purifying AC voltage is kept being turned on. Still further, when the exhaust gas temperature T is 300 °C or more, the molten-salt type catalyst in the trapping portion 20 is fully activated as well, the PM purifying AC voltage is also turned off to save electricity.

**TABLE 1**

| Exhaust Gas Temp. T | Charging DC Voltage | PM Purifying AC Voltage | Second Discharging AC Voltage |
|---|---|---|---|
| Less than 250 °C | On | On | On |
| 250 - 300 °C | On | On | Off |
| More than 300 °C | On | Off | Off |

Then, at step 405, based on a map (See Table 2 below.) which is recorded in the memory of the controlling device 4, the controlling device 4 controls to turn on or off the charging DC voltage, the PM purifying AC voltage and the second discharging AC voltage in accordance with the running circumstances of the diesel engine 1.

When accelerating, since the PM, HC and NOₓ are abundant in the exhaust gas, all of the charging DC voltage, the PM purifying AC voltage and the second discharging AC voltage are turned on. Moreover, when decelerating, the charging DC voltage is turned on to trap the oil mist, and so forth. Then, the PM deposition X is compared with the critical deposition A. When X > A, the PM purifying AC voltage is turned on so that the deposited PM are burned and removed by electrically discharged plasma. In this instance, since the HC and NOₓ are present less in the exhaust gas, the second discharging AC voltage is turned off.

When ordinary driving, the charging DC voltage is turned on to trap the oil mist, and so forth. Then, the amount of PM Y is compared with the predetermined value C. When Y > C, the PM purifying AC voltage is turned on so that the PM are burned and removed by electrically charged plasma. When Y ≦ C, the PM deposition X is compared with the critical deposition A. Then, the processing is carried out similarly to the processing in deceleration. On the other hand, the amount of NOₓ N is also compared with the predetermined value D. When N > D, the second discharging AC voltage is turned on to help purifying the HC and NOₓ in the exhaust gas by electrically discharged plasma. However, when N ≦ D, since it possible to purify the HC and NOₓ with the 3-way catalyst 7 alone, the second discharging AC voltage is turned off to save electricity.

When idling, the charging DC voltage is turned on to trap the oil mist, and so forth. Moreover, the PM deposition X is compared with the critical deposition A. Then, the processing is carried out similarly to the processing in deceleration. Moreover, the amount of NOₓ N is also compared with the predetermined value D. Then, the processing is carried out similarly to the processing in ordinary driving.

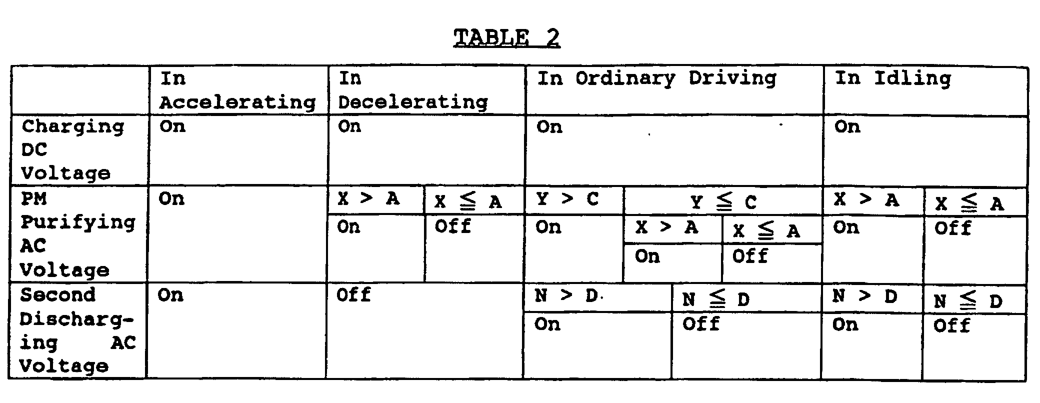

At following step 406, the controlling device 4 refers to the results found at step 404 and step 405. Then, the controlling device 4 controls the charging DC voltage, the PM purifying AC voltage or the second discharging AC voltage, which has been turned off at one of step 404 and step 405 at least, to turn off; and to turn on the remaining charging DC voltage, PM purifying AC voltage or second discharging AC voltage.

Then, at step 407, the controlling device 4 judges whether the PM purifying AC voltage is turned on or not. When the PM purifying AC voltage is turned on, the PM deposition X is updated by reducing it in accordance with the time required for the electric discharge. Thereafter, the processing returns to step 401.

Therefore, in the exhaust gas purifying apparatus of Example No. 4, it is possible to finely control the high-voltage producing device 3 in accordance with the exhaust gas temperature T as well as the operating states of the diesel engine 1. As a result, it is possible to suppress the electricity consumption while purifying the PM efficiently.

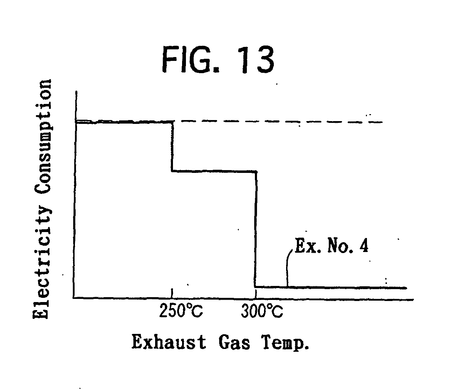

Fig. 13 illustrates the advantage effected by the exhaust gas purifying apparatus of Example No. 4. In Fig. 13, the electricity consumption of the high-voltage producing device 3 is plotted with respect to the vertical axis, and the exhaust gas temperature is plotted with respect to the horizontal axis. Note that Fig. 13 illustrates the electricity consumption in ordinary driving. When the controlling device 4 controlled the high-voltage producing device 3 to always turn on the charging DC voltage, the PM purifying AC voltage and the second discharging AC voltage, as shown by the dotted line of Fig. 13, it was difficult to suppress the electricity consumption in accordance with the exhaust gas temperature. On the contrary, by the exhaust gas purifying apparatus of Example No. 4, it was possible to gradually reduce the electricity consumption at threshold boundary points, i.e., 250 °C and 300 °C. Moreover, since only the charging DC voltage was turned on at 300 °C or more, it was possible to sharply reduce the electricity consumption.

Having now fully described the present invention, it will be apparent to one of ordinary skill in the art that many changes and modifications can be made thereto without departing from the scope of the present invention as set forth herein including the appended claims.

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention.

## Claims

1. An apparatus for purifying exhaust gases containing particulate materials emitted from an internal combustion engine, comprising:
a charger (3, 21, 25) adapted to charge the particulate materials;
a trapper (2, 20) adapted to trap charged particulate materials by absorbing the charged particulate matter using an electrostatic force, the trapper including a first catalyst having at least oxidative activity, and
a first discharger (3, 6, 21, 24) adapted to oxidize particulate materials trapped onto the trapper, the first discharger being constituted so as to generate a plasma electrical discharge, **characterized in that**:
the first catalyst comprises a molten-salt type catalyst that melts at a predetermined temperature and that oxidizes and burns trapped particulate matter, said molten-salt type catalyst comprising a catalytic component loaded onto a solid support.

2. The exhaust gas purifying apparatus for an internal combustion engine set forth in claim 1, wherein the solid support comprises at least one member selected from the group consisting of oxides of alkali metals, oxides of alkaline-earth metals and oxides of rare-earth metals.

3. The exhaust gas purifying apparatus for an internal combustion engine set forth in claim 1 or 2, wherein the catalytic component further comprises an oxidation promoting component selected from oxides of vanadium and oxides of alkaline-earth metals.

4. The exhaust gas purifying apparatus for an internal combustion engine set forth in any one of claims 1-3, wherein the first catalyst comprises an oxygen-releasing catalyst selected from ceria and ceria-zirconia composite oxides.

5. The exhaust gas purifying apparatus for an internal combustion engine set forth in any one of claims 1-4, wherein the first catalyst comprises a noble metal serving as the NO₂-generating catalyst selected from Pt, Pd, Rh and Ir, the noble metal being loaded onto the solid support, wherein the solid support is porous and is composed of alumina or silica.

6. The exhaust gas purifying apparatus for an internal combustion engine set forth in any one of claims 1-5, further comprising a second catalyst disposed on at least one of an upstream side and a downstream side of said trapper (2, 20) and including at least one member selected from the group consisting of oxidizing catalysts, 3-way catalysts, NOₓ reducing catalysts and NOₓ storage-and-reduction type catalysts.

7. The exhaust gas purifying apparatus for an internal combustion engine set forth in any one of claims 1-5, further comprising a second discharger (6) disposed on a downstream side of said trapper (2, 20), the second discharger generating an electric discharge to purify harmful components contained in gases exhausted from said trapper.

8. The exhaust gas purifying apparatus for an internal combustion engine set forth in claim 7, further comprising a second catalyst disposed on at least one of an upstream side and a downstream side of said second discharger (6) and including at least one member selected from the group consisting of oxidizing catalysts, 3-way catalysts, NOₓ reducing catalysts and NOₓ storage-and-reduction type catalysts.

9. The exhaust gas purifying apparatus for an internal combustion engine set forth in any one of claims 1-8, wherein the first catalyst further includes at least one member selected from the group consisting of NO₂-generating catalysts and oxygen-releasing catalysts.

10. The exhaust gas purifying apparatus for an internal combustion engine set forth in any one of claims 1-9, further comprising a temperature sensor (5) adapted to detect at least one of the temperature of the exhaust gases flowing into said trapper (2, 20) and the temperature of said trapper, wherein said first discharger (3, 6, 21, 24) is adapted to be actuated when one of said temperatures is less than a predetermined value.

11. The exhaust gas purifying apparatus for an internal combustion engine set forth in any one of claims 1-9, wherein the temperature of the exhaust gases flowing into said trapper (2, 20) is estimated and said first discharger (3, 6, 21, 24) is adapted to be actuated when the estimated temperature is less than a predetermined value.

12. The exhaust gas purifying apparatus for an internal combustion engine set forth in any one of claims 1-9, further comprising a PM sensor adapted to detect a trapped amount of said particulate materials trapped onto said trapper (2, 20), wherein said first discharger (3, 6, 21, 24) is adapted to be actuated when the trapped-amount exceeds a predetermined value.

13. The exhaust gas purifying apparatus for an internal combustion engine set forth in any one of claims 1-9, wherein the content of said particulate materials in the exhaust gases is estimated based upon the operating states of the internal combustion engine, and at least one of said charger (3, 21, 25) and said discharger (3, 6, 21, 24) is adapted to be actuated when the content exceeds a predetermined value.

14. The exhaust gas purifying apparatus for an internal combustion engine set forth in any one of the preceding claims, wherein the catalytic component includes at least one compound selected from the group consisting of silver nitrate, nitrates of alkali metals, nitrates of alkaline-earth metals and nitrates of rare-earth elements.

15. The exhaust gas purifying apparatus for an internal combustion engine set forth in any one of the preceding claims, wherein said molten salt type catalyst melts at 300°C or less.

16. A method for purifying exhaust gases containing particulate materials emitted from an internal combustion engine, the method comprising applying a charge to the particulate materials using a charger (3, 21, 25), trapping charged particulate materials in a trapper (2, 20) by application of an electrostatic force, oxidizing and burning trapped particulate materials by contacting the trapped particulate materials with an oxidative catalyst composition, and generating an electric plasma discharge using a discharger (3, 6, 21, 24) so as to further oxidize and burn trapped particulate materials, **characterized in that**:
the oxidative catalyst composition comprises a molten-salt type catalyst that melts at a predetermined temperature, said molten-salt type catalyst comprising a catalytic component loaded onto a solid support.

## Patentansprüche

1. Eine Vorrichtung zum Reinigen von Abgasen, die teilchenförmige Materialien enthalten und von einem Verbrennungsmotor emittiert werden, wobei die Vorrichtung
eine Aufladungseinrichtung (3, 21, 25), die zum Aufladen der teilchenförmigen Materialien angepasst ist,
eine Einfangeinrichtung (2, 20), die zum Einfangen aufgeladener teilchenförmiger Materialien durch Absorbieren der aufgeladenen teilchenförmigen Materialien unter Verwendung einer elektrostatischen Kraft angepasst ist, wobei die Einfangeinrichtung einen ersten Katalysator mit mindestens einer Oxidationsaktivität umfasst, und
eine erste Entladungseinrichtung (3, 6, 21, 24) umfasst, die angepasst ist, die teilchenförmigen Materialien, die auf der Einfangeinrichtung eingefangen worden sind, zu oxidieren, wobei die erste Entladungseinrichtung so aufgebaut ist, dass sie eine elektrische Plasmaentladung erzeugt, **dadurch gekennzeichnet, dass**
der erste Katalysator einen Katalysator des geschmolzenen Salz-Typs umfasst, der bei einer vorgegebenen Temperatur schmilzt und eingefangene teilchenförmige Materialien oxidiert und verbrennt, wobei der Katalysator des geschmolzenen Salz-Typs eine auf einem festen Träger aufgebrachte katalytische Komponente umfasst.

2. Vorrichtung zum Reinigen von Abgasen für einen Verbrennungsmotor nach Anspruch 1, bei welcher der feste Träger mindestens ein Mitglied umfasst, das aus der Gruppe bestehend aus Oxiden von Alkalimetallen, Oxiden von Erdalkalimetallen und Oxiden von Seltenerdmetallen ausgewählt ist.

3. Vorrichtung zum Reinigen von Abgasen für einen Verbrennungsmotor nach Anspruch 1 oder 2, bei der die katalytische Komponente ferner eine oxidationsbeschleunigende Komponente umfasst, die aus Oxiden von Vanadium und Oxiden von Erdalkalimetallen ausgewählt ist.

4. Vorrichtung zum Reinigen von Abgasen für einen Verbrennungsmotor nach einem der Ansprüche 1 bis 3, bei welcher der erste Katalysator einen sauerstofffreisetzenden Katalysator umfasst, der aus Ceroxid und Ceroxid-Zirkoniumoxid-Mischoxiden ausgewählt ist.

5. Vorrichtung zum Reinigen von Abgasen für einen Verbrennungsmotor nach einem der Ansprüche 1 bis 4, bei welcher der erste Katalysator ein Edelmetall umfasst, das als NO₂erzeugender Katalysator dient und aus Pt, Pd, Rh und Ir ausgewählt ist, wobei das Edelmetall auf dem festen Träger aufgebracht ist, wobei der feste Träger porös und aus Aluminiumoxid oder Siliziumdioxid zusammengesetzt ist.

6. Vorrichtung zum Reinigen von Abgasen für einen Verbrennungsmotor nach einem der Ansprüche 1 bis 5, die ferner einen zweiten Katalysator umfasst, der auf mindestens einer von einer stromaufwärts liegenden Seite und einer stromabwärts liegenden Seite der Einfangeinrichtung (2, 20) angeordnet ist und mindestens ein Mitglied umfasst, das aus der Gruppe bestehend aus Oxidationskatalysatoren, 3-Wege-Katalysatoren, NOₓ-reduzierenden Katalysatoren und Katalysatoren des NOₓ-Speicher-und-Reduktions-Typs ausgewählt ist.

7. Vorrichtung zum Reinigen von Abgasen für einen Verbrennungsmotor nach einem der Ansprüche 1 bis 5, die ferner eine zweite Entladungseinrichtung (6) umfasst, die auf einer stromabwärts liegenden Seite der Einfangeinrichtung (2, 20) angeordnet ist, wobei die zweite Entladungseinrichtung eine elektrische Entladung zur Entfernung schädlicher Komponenten erzeugt, die in den von der Einfangeinrichtung abgegebenen Gasen enthalten sind.

8. Vorrichtung zum Reinigen von Abgasen für einen Verbrennungsmotor nach Anspruch 7, die ferner einen zweiten Katalysator umfasst, der auf mindestens einer von einer stromaufwärts liegenden Seite und einer stromabwärts liegenden Seite der zweiten Entladungseinrichtung (6) angeordnet ist und mindestens ein Mitglied umfasst, das aus der Gruppe bestehend aus Oxidationskatalysatoren, 3-Wege-Katalysatoren, NOₓ-reduzierenden Katalysatoren und Katalysatoren des NOₓ-Speicher-und-Reduktions-Typs ausgewählt ist.

9. Vorrichtung zum Reinigen von Abgasen für einen Verbrennungsmotor nach einem der Ansprüche 1 bis 8, bei welcher der erste Katalysator ferner mindestens ein Mitglied umfasst, das aus der Gruppe bestehend aus NO₂-erzeugenden Katalysatoren und sauerstofffreisetzenden Katalysatoren ausgewählt ist.

10. Vorrichtung zum Reinigen von Abgasen für einen Verbrennungsmotor nach einem der Ansprüche 1 bis 9, die ferner einen Temperatursensor (5) umfasst, der angepasst ist, mindestens eine von der Temperatur der Abgase, die in die Einfangeinrichtung (2, 20) strömen und der Temperatur der Einfangeinrichtung zu erfassen, wobei die erste Entladungseinrichtung (3, 6, 21, 24) angepasst ist, betätigt zu werden, wenn eine der Temperaturen unter einem vorgegebenen Wert liegt.

11. Vorrichtung zum Reinigen von Abgasen für einen Verbrennungsmotor nach einem der Ansprüche 1 bis 9, bei der die Temperatur der Abgase, die in die Einfangeinrichtung (2, 20) strömen, abgeschätzt wird, und die erste Entladungseinrichtung (3, 6, 21, 24) angepasst ist, betätigt zu werden, wenn die abgeschätzte Temperatur unter einem vorgegebenen Wert liegt.

12. Vorrichtung zum Reinigen von Abgasen für einen Verbrennungsmotor nach einem der Ansprüche 1 bis 9, die ferner einen PM-Sensor umfasst, der angepasst ist, eine eingefangene Menge der teilchenförmigen Materialien, die auf der Einfangeinrichtung (2, 20) eingefangen worden sind, zu erfassen, wobei die erste Entladungseinrichtung (3, 6, 21, 24) angepasst ist, betätigt zu werden, wenn die eingefangene Menge einen vorgegebenen Wert übersteigt.

13. Vorrichtung zum Reinigen von Abgasen für einen Verbrennungsmotor nach einem der Ansprüche 1 bis 9, bei welcher der Gehalt der teilchenförmigen Materialien in den Abgasen auf der Basis der Betriebszustände des Verbrennungsmotors abgeschätzt wird und mindestens eine von der Aufladungseinrichtung (3, 21, 25) und der Entladungseinrichtung (3, 6, 21, 24) angepasst ist, betätigt zu werden, wenn der Gehalt einen vorgegebenen Wert übersteigt.

14. Vorrichtung zum Reinigen von Abgasen für einen Verbrennungsmotor nach einem der vorstehenden Ansprüche, bei der die katalytische Komponente mindestens eine Verbindung umfasst, die aus der Gruppe bestehend aus Silbernitrat, Nitraten von Alkalimetallen, Nitraten von Erdalkalimetallen und Nitraten von Seltenerdelementen ausgewählt ist.

15. Vorrichtung zum Reinigen von Abgasen für einen Verbrennungsmotor nach einem der vorstehenden Ansprüche, bei welcher der Katalysator des geschmolzenen Salz-Typs bei 300°C oder weniger schmilzt.

16. Ein Verfahren zum Reinigen von Abgasen, die teilchenförmige Materialien enthalten und von einem Verbrennungsmotor emittiert werden, wobei das Verfahren das Aufladen der teilchenförmigen Materialien unter Verwendung einer Aufladungseinrichtung (3, 21, 25), das Einfangen aufgeladener teilchenförmiger Materialien in einer Einfangeinrichtung (2, 20) durch Ausüben einer elektrostatischen Kraft, das Oxidieren und Verbrennen eingefangener teilchenförmiger Materialien durch In-Kontakt-Bringen der eingefangenen teilchenförmigen Materialien mit einer Oxidationskatalysatorzusammensetzung und das Erzeugen einer elektrischen Plasmaentladung unter Verwendung einer Entladungseinrichtung (3, 6, 21, 24) umfasst, so dass eingefangene teilchenförmige Materialien weiter oxidiert und verbrannt werden, **dadurch gekennzeichnet, dass**
die Oxidationskatalysatorzusammensetzung einen Katalysator des geschmolzenen Salz-Typs umfasst, der bei einer vorgegebenen Temperatur schmilzt, wobei der Katalysator des geschmolzenen Salz-Typs eine auf einem festen Träger aufgebrachte katalytische Komponente umfasst.

## Revendications

1. Dispositif d'épuration des gaz d'échappement contenant des matières en particule émises par un moteur à combustion interne, comprenant:
un chargeur (3, 21, 25) destiné à charger les matières en particule;
un piège (2, 20) destiné à piéger les matières en particule chargées en absorbant la matière particulaire chargée en utilisant une force électrostatique, le piège comprenant un premier catalyseur ayant au moins une activité oxydante,
un premier déchargeur (3, 6, 21, 24) destiné à oxyder des matières en particule piégées sur le piège, le premier déchargeur étant constitué de manière à produire une décharge électrique par plasma, **caractérisé en ce que** :
le premier catalyseur comprend un catalyseur du type en sel fondu, qui fond à une température déterminée à l'avance, qui oxyde et brûle la matière particulaire piégée, la catalyseur de type en sel fondu comprenant un constituant catalytique chargé sur un support solide.

2. Dispositif d'épuration des gaz d'échappement d'un moteur à combustion interne suivant la revendication 1, dans lequel le support solide comprend au moins un membre choisi dans le groupe consistant en des oxydes de métaux alcalins, des oxydes de métaux alcalino-terreux et en des oxydes de métaux de terre rare.

3. Dispositif d'épuration des gaz d'échappement d'un moteur à combustion interne suivant la revendication 1 ou 2, dans lequel le constituant catalytique comprend, en outre, un constituant favorisant l'oxydation choisi parmi des oxydes de vanadium et des oxydes de métaux alcalino-terreux.

4. Dispositif d'épuration des gaz d'échappement d'un moteur à combustion interne suivant l'une quelconque des revendications 1 à 3, dans lequel le premier catalyseur comprend un catalyseur dégageant de l'oxygène choisi parmi l'oxyde de cérium et les oxydes composites à base d'oxyde de cérium et d'oxyde de zirconium.

5. Dispositif d'épuration des gaz d'échappement d'un moteur à combustion interne suivant l'une quelconque des revendications 1 à 4, dans lequel le premier catalyseur comprend un métal précieux servant de catalyseur engendrant du NO₂, choisi parmi Pt, Pd, Rh et Ir, le métal précieux étant chargé sur le support solide, le support solide étant poreux et étant composé d'alumine ou de silice.

6. Dispositif d'épuration des gaz d'échappement d'un moteur à combustion interne suivant l'une quelconque des revendications 1 à 5, comprenant, en outre, un deuxième catalyseur disposé sur au moins l'un d'un côté en amont et d'un côté en aval du piège (2, 20) et comprenant au moins un membre choisi dans groupe consistant en des catalyseurs d'oxydation, en des catalyseurs à trois voies, en des catalyseurs de réductions de NOₓ et en des catalyseurs de type emmagasinage et réduction de NOₓ.

7. Dispositif d'épuration des gaz d'échappement d'un moteur à combustion interne suivant l'une quelconque des revendications 1 à 5, comprenant, en outre, un deuxième déchargeur (6) disposé du côté en aval du piège (2, 20), le deuxième déchargeur engendrant une décharge électrique pour se débarrasser de constituants nuisibles contenus dans des gaz sortant du piège.

8. Dispositif d'épuration des gaz d'échappement d'un moteur à combustion interne suivant la revendication 7, comprenant, en outre, un deuxième catalyseur disposé sur au moins l'un d'un côté en amont et d'un côté en aval du deuxième déchargeur (6) et comprenant au moins un membre choisi dans le groupe consistant en des catalyseurs d'oxydation, en des catalyseurs à trois voies, en des catalyseurs de réductions de NOₓ et en des catalyseurs de type emmagasinage et réduction de NOₓ.

9. Dispositif d'épuration des gaz d'échappement d'un moteur à combustion interne suivant l'une quelconque des revendications 1 à 8, dans lequel le premier catalyseur comprend, en outre, un membre choisi dans le groupe consistant en des catalyseurs engendrant du NO₂ et des catalyseurs dégageant de l'oxygène.

10. Dispositif d'épuration des gaz d'échappement d'un moteur à combustion interne suivant l'une quelconque des revendications 1 à 9, comprenant, en outre, un capteur (5) de température, destiné à détecter au moins l'une dé la température des gaz d'échappement passant dans le piège (2, 20) et de la température du piège, le premier déchargeur (3, 6, 21, 24) étant destiné à être actionné quand l'une de ces températures est inférieure à une valeur déterminée à l'avance.

11. Dispositif d'épuration des gaz d'échappement d'un moteur à combustion interne suivant l'une quelconque des revendications 1 à 9, dans lequel la température des gaz d'échappement passant dans le piège (2, 20) est estimée et le premier déchargeur (3, 6, 21, 24) est destiné à être actionné quand la température estimée est inférieure à une valeur déterminée à l'avance.

12. Dispositif d'épuration des gaz d'échappement d'un moteur à combustion interne suivant l'une quelconque des revendications 1 à 9, comprenant en outre, capteur de PM destiné à détecter une quantité piégée des matières en particule piégées sur le piège (2, 20), le premier déchargeur (3, 6, 21, 24) étant destiné à être actionné quand la quantité piégée dépasse une valeur déterminée à l'avance.

13. Dispositif d'épuration des gaz d'échappement d'un moteur à combustion interne suivant l'une quelconque des revendications 1 à 9, dans lequel la teneur en les matières en particule des gaz d'échappement est estimée sur la base des états de fonctionnement du moteur à combustion interne et au moins l'un du chargeur (3, 21, 25) et du déchargeur (3, 6, 21, 24) est destiné à être actionné lorsque la teneur dépasse une valeur déterminée à l'avance.

14. Dispositif d'épuration des gaz d'échappement d'un moteur à combustion interne suivant l'une quelconque des revendications précédentes, dans lequel le constituant catalytique comprend au moins un composé choisi dans le groupe consistant en le nitrate d'argent, les nitrates de métaux alcalins, le nitrates de métaux alcalino-terreux et les nitrates d'éléments de terre rare.

15. Dispositif d'épuration des gaz d'échappement d'un moteur à combustion interne suivant l'une quelconque des revendications précédentes, dans lequel le catalyseur, du type en sel fondu, fond à 300°C ou, à une température inférieure à 300°C.

16. Procédé d'épuration des gaz d'échappement contenant des matières en particule émises par un moteur à combustion interne, le procédé consistant à appliquer une charge à la matière en particule en utilisant un chargeur (3, 21, 25), à piéger des matières en particule chargées dans un piège (2, 20) par application d'une force électrostatique, à oxyder et à brûler les matières en particule piégées en mettant les matières en particule en contact avec une composition catalytique oxydante et à engendrer une décharge électrique au plasma en utilisant un déchargeur (3, 6, 21, 24) de façon à oxyder davantage et à brûler davantage les matières en particule piégées, **caractérisé en ce que** :
la composition catalytique oxydante comprend un catalyseur du type en sel fondu, qui fond à une température déterminée à l'avance, le catalyseur du type en sel fondu comprenant un constituant catalytique chargé sur un support solide.
